# EUROPÄISCHE PATENTANMELDUNG

(11) **EP 3 054 236 A1**
(43) Veröffentlichungstag der Anmeldung: **10.08.2016**
(21) Anmeldenummer: 16151864.2
(22) Anmeldetag: 19.01.2016
(51) Int. Cl.: F24H 1/52, F24H 4/04, F24H 9/12, F28F 9/02, F28D 20/00

(54) **FLUIDSPEICHER**

(30) Priorität: 03.02.2015 AT 482015
(71) Anmelder: Forstner, Maximilian, 6971 Hard (AT)
(72) Erfinder: Forstner, Maximilian, 6971 Hard (AT)
(74) Vertreter: Fechner, Thomas

(57) **Zusammenfassung**

Fluidspeicher (1) zum Speichern einer Wärmeträgerflüssigkeit in einem Speicherhohlraum (20) eines Speicherbehälters (2) des Fluidspeichers (1), wobei innerhalb des Speicherhohlraums (20) zumindest ein Kondensator (70) eines von einem Kältemittel durchströmten Wärmepumpenkreislaufs (7) zum Erwärmen der Wärmeträgerflüssigkeit angeordnet ist, und das durch den Kondensator (70) strömende Kältemittel mittels des Wärmepumpenkreislaufs (7) mit außerhalb des Fluidspeichers (1) aufgenommener Umgebungswärme des Wärmepumpenkreislaufs (7) erwärmt oder erwärmbar ist, wobei zumindest ein Kompressor (71) des Wärmepumpenkreislaufs (7) in den Fluidspeicher (1) zur Nutzung der Wärme der Wärmeträgerflüssigkeit im Fluidspeicher (1) integriert ist. (Fig. 1)

## Beschreibung

Die vorliegende Erfindung betrifft einen Fluidspeicher zum Speichern einer Wärmeträgerflüssigkeit in einem Speicherhohlraum eines Speicherbehälters des Fluidspeichers, wobei innerhalb des Speicherhohlraums zumindest ein Kondensator eines von einem Kältemittel durchströmten Wärmepumpenkreislaufs zum Erwärmen der Wärmeträgerflüssigkeit angeordnet ist, und das durch den Kondensator strömende Kältemittel mittels des Wärmepumpenkreislaufs mit außerhalb des Fluidspeichers aufgenommener Umgebungswärme des Wärmepumpenkreislaufs erwärmt oder erwärmbar ist.

Wärmepumpen zum Erwärmen von in Fluldspeichern gespeicherten Wärmeträgerflüssigkeiten sind schon lange bekannt. Mit einer Wärmepumpe kann unter Aufwendung von mechanischer Arbeit (z.B. durch Verdichtung eines Kältemittels) thermische Energie aus einer Zone mit niedriger Temperatur (z.B. aus der Umgebung) aufgenommen und zusammen mit der aufgewendeten Antriebsenergie (= mechanische Arbeit zur Verdichtung des Kältemittels) als Nutzwärme mit höherer Temperatur auf ein zu beheizendes System übertragen werden. Die Wärmepumpe arbeitet dabei als Kreislaufsystem, d.h., dass das Kältemittel nach der Abgabe von Wärmeenergie im Kondensator des Wärmepumpenkreislaufs durch eine Drossel (=Expansionsventil) strömt und dem Verdampfer zur Aufnahme thermischer Energie aus der Umgebung zugeführt wird. Anschließend wird das Kältemittel wiederum verdichtet und wieder dem Kondensator zugeführt.

Die gattungsgemäße DE 10 2007 050 674 A1 offenbart einen in einem Speicherbehälter angeordneten und von einem Kältemittel durchströmten Kondensator einer externen Wärmepumpe. Zusätzlich ist in dieser Schrift eine integrierte Wärmepumpe gezeigt, welche die Wärmeenergie im Speicherbehälter umschichtet. Hierzu wird Wärme aus dem unteren Bereich des Speichers mittels eines im Speicherhohlraum angeordneten Verdampfers entzogen und in einem oberhalb dieses Bereichs angeordneten Kondensator mit höherer Temperatur zur Erwärmung von Brauchwasser eingebracht. Der in der genannten Schrift offenbarte Fluidspeicher benötigt eine Vielzahl von Komponenten. Es sind zwei unabhängige Kältemittelkreise, einer für die externe Wärmepumpe und einer für die integrierte, rein intern umschichtende Wärmepumpe nötig. Der Betrieb der beiden Wärmepumpenkreisläufe erfordert auch eine entsprechende Versorgung der beiden Kompressoren mit elektrischer Energie.

Häufig benötigen insbesondere die Kompressoren von Wärmepumpenkreisläufen, welche mit Umgebungswärme gespeist werden, Olsumpfheizungen zur Erhaltung der Schmierfähigkeit des Öls im Kompressor vor allem bei niedrigen Temperaturen. Der Betrieb der Ölsumpfheizung erfordert beträchtliche Mengen an elektrischer Energie und schmälert damit die Effizienz des gesamten Wärmepumpenkreislaufs.

Aufgabe der Erfindung ist es, einen Fluidspeicher der oben genannten Art zur Verfügung zu stellen, bei dem die Energieeffizienz eines Wärmepumpenkreislaufs gegenüber dem Stand der Technik gesteigert werden kann.

Erfindungsgemäß gelingt dies mit einem Fluidspeicher mit den Merkmalen des Anspruchs 1.

Bei einem Fluidspeicher gemäß der Erfindung ist somit vorgesehen, dass zumindest ein Kompressor des Wärmepumpenkreislaufs in den Fluidspeicher zur Nutzung der Wärme der Wärmeträgerfiüssigkeit im Fluidspeicher integriert ist.

Durch die Integration des zumindest einen Kompressors des Wärmepumpenkreislaufs in den Fluidspeicher kann Wärmeenergie von der im Fluidspeicher gespeicherten Wärmeträgerflüssigkeit genutzt werden, um den Kompressor zu erwärmen. Es kann damit auf eine Ölsumpfheizung zur Erwärmung des Kompressors bzw. des Öls im Kompressor verzichtet werden. Die Effizienz des Wärmepumpenkreislaufs kann gesteigert werden, da der sonst nötige Energieverbrauch einer Ölsumpfheizung entfällt. Auch kann die Komplexität des Kompressors durch Wegfall entsprechender Heizelemente verringert werden, was den Investitions- und Wartungsaufwand verringert.

Der Fluidspeicher könnte im Rahmen dieser Schrift auch als Puffer, Pufferspeicher oder Zwischenspeicher bezeichnet werden und ist in bevorzugten Varianten der Erfindung insbesondere als Warmwasserspeicher, vorzugsweise für den Einsatz in Privathäusern ausgelegt. Vorteilhafterweise ist vorgesehen, dass der Speicherhohlraum des Speicherbehälters des Fluidspeichers ein Volumen von zumindest 500 Liter aufweist. Es ist es denkbar und möglich, Fluidspeicher mit einem Speicherhohlraum mit einem Volumen von mehr als 10.000 Liter zur Verfügung zu stellen. Im Rahmen der Erfindung ist allerdings ein Speicherhohlraum mit einem Volumen von höchstens 5.000 Liter, vorzugsweise von höchstens 2.000 Liter, bevorzugt.

Der Fluidspeicher dient dem Ausgleich von zeitlichen Unterschieden zwischen Zufluss bzw. Angebot und Abfluss bzw. Nachfrage an entsprechender Wärme. Als Wärmeträgerflüssigkeit kommen alle beim Stand der Technik für diesen Einsatzzweck bekannten Flüssigkeiten wie z.B. Wasser, Wasser-Glykol-Gemische, Sole oder dergleichen in Frage.

Die Wärmeträgerflüssigkeit, insbesondere Wasser, ist im Speicherhohlraum günstigerweise horizontal geschichtet, also in horizontalen Schichten verschiedener Temperaturen gespeichert. Bei einer ungestörten thermischen Schichtung befindet sich Wärmeträgerflüssigkeit mit höherer Temperatur aufgrund der geringeren Dichte der Wärmeträgerflüssigkeit bei höheren Temperaturen im oberen Bereich des Speicherhohlraums, während kältere Wärmeträgerflüssigkeit sich im unteren Bereich des Speicherhohlraums sammelt. Der Fluidspeicher gemäß der Erfindung könnte daher auch als Schichtspeicher bezeichnet werden.

Vorzugsweise ist vorgesehen, dass der Kompressor in der oberen Hälfte der Vertikalerstreckung des Speicherhohlraums am oder im Speicherbehälter angeordnet ist. In diesen Bereichen ist die Temperatur der gespeicherten Wärmeträgerflüssigkeit am höchsten, womit eine effektive Beheizung des Kompressors besonders günstig realisierbar ist.

Der in den Speicherhohlraum integrierte Kondensator kann auch als Verflüssiger bezeichnet werden und erstreckt sich günstigerweise über zumindest 60%, vorzugsweise über zumindest 70%, der Vertikalerstreckung des Speicherhohlraums. Das vom Kompressor austretende und in Betriebsstellung des Fluidspeichers gesehen, günstigerweise von oben in den Kondensator eintretende Kältemittel hat eine hohe Temperatur und wird auch als Heißgas bezeichnet. Die Wärmeträgerflüssigkeit wird vom durch den Kondensator strömenden Kältemittel günstigerweise von oben her mit hoher Temperatur erwärmt, wodurch die gewünschte Temperaturschichtung im Speicherhohlraum unterstützt werden kann. Im Verlauf der Abgabe der Wärmeenergie an die Wärmeträgerflüssigkeit kondensiert das Kältemittel und tritt in flüssiger Form unten aus dem Kondensator in das Expansionsventil über.

Vorzugsweise ist vorgesehen, dass im Speicherhohlraum des Speicherbehälters ein Brauchwasserwärmetauscher zur Erwärmung von Brauchwasser angeordnet ist. Das im Brauchwasserwärmetauscher zu erwärmende Brauchwasser wird in der Regel über den Hausanschluss bereitgestellt und zur Nutzung als Brauchwasser im Fluidspeicher erwärmt. Der Brauchwasserwärmetauscher erstreckt sich günstigerweise über zumindest 75%, vorzugsweise über zumindest die oberen 75%, der Vertikalerstreckung des Speicherhohlraums und nutzt die aufgrund der thermischen Schichten vorhandene hohe Temperatur der im oberen Bereich gespeicherten Wärmeträgerflüssigkeit zur Bereitstellung von warmem Brauchwasser.

Bevorzugt ist vorgesehen, dass auch ein Verdampfer des Wärmepumpenkreislaufs in den Fluidspeicher integriert ist. Durch die Integration des Verdampfers des Wärmepumpenkreislaufs in den Fluidspeicher kann eine kompakte Einheit des Fluidspeichers bereitgestellt werden. Der Verdampfer der Wärmepumpe muss dann nicht als separates Gerät außerhalb des bzw. neben dem Fluidspeicher angeordnet werden. Im Verdampfer wird Kältemittel durch Aufnahme von aus der Umgebung aufgenommener Umgebungswärme verdampft.

Die vom Verdampfer aus der Umgebung aufgenommene Umgebungswärme kann in verschiedenen Formen zugeführt werden. Der erfindungsgemäße Fluidspeicher kann z.B. mit Erdwärmepumpen, (Grund-) Wasserwärmepumpen und Luftwärmepumpen kombiniert bzw. betrieben werden, also mit Wärme aus dem Erdreich, Grundwasser und/oder der Außenluft gespeist werden.

Bevorzugte Ausgestaltungsformen der Erfindung sehen vor, dass der in den Fluidspeicher integrierte Kompressor und vorzugsweise auch der in den Fluidspeicher integrierte Verdampfer zumindest teilweise, vorzugsweise vollständig innerhalb eines Maschinenhohlraums des Fluidspeichers angeordnet ist oder sind, wobei zumindest eine Trennwand zwischen dem Speicherhohlraum und dem Maschinenhohlraum angeordnet ist. Der Maschinenhohlraum des Fluidspeichers könnte auch als Kammer bezeichnet werden, welche zum Teil oder vollständig abgeschlossen ist, wobei die zumindest eine Trennwand eine Wand der Kammer bildet. Der Maschinenhohlraum stellt günstigerweise einen definierten Platz zur Aufnahme der vorzugsweise außerhalb des Speicherhohlraums angeordneten Komponenten des Wärmepumpenkreislaufs, insbesondere des Kompressors und vorzugsweise auch des Verdampfers, zur Verfügung.

Vorzugsweise ist vorgesehen, dass die Trennwand von einer den Speicherhohlraum und den Maschinenhohlraum begrenzenden Wand des Speicherbehälters gebildet ist. Die den Speicherhohlraum begrenzende Wand des Speicherbehälters bildet eine Art Wärmeübertragungsfläche, über welche die in der Wärmeträgerflüssigkeit gespeicherte Wärme zur Erwärmung des Kompressors übertragen wird. Die Trennwand könnte in diesem Zusammenhang auch als Wärmeübertragungswand bezeichnet werden.

Günstigerweise kann vorgesehen sein, dass die Trennwand eine in den Speicherhohlraum hineinragende Einbuchtung des Speicherbehälters ausbildet, wobei vorzugsweise vorgesehen ist, dass die Einbuchtung eine, in einem Querschnitt gesehen, konkave Form aufweist. Eine derartige Einbuchtung könnte auch als Nische bezeichnet werden, die in den Speicherhohlraum hineinragend von einer die Trennwand bildenden Wand des Speicherbehälters ausgebildet ist. Die Einbuchtung ermöglicht eine große Wärmeübertragungsfläche der Trennwand, wodurch er Kompressor effektiv beheizt werden kann. Neben der konkaven Form der Einbuchtung ist es denkbar, dass die Querschnittsfläche der Einbuchtung auch andere geeignete Formen aufweist. Es ist beispielsweise denkbar und möglich, dass die Einbuchtung, in einem Querschnitt gesehen, die Form eines Vielecks oder eines Kreissegment aufweist.

Vorteilhafterweise kann vorgesehen sein, dass der Maschinenhohlraum eine Kompressorkonsole zur Montage des Kompressors, vorzugsweise zum darauf Abstellen des Kompressors, aufweist, wobei die Kompressorkonsole den Maschinenhohlraum unterteilt. Bevorzugt kann dann vorgesehen sein, dass der Maschinenhohlraum im Bereich des Kompressors luftgefüllt ist. Es ist denkbar und möglich, dass in dem Bereich des Maschinenhohlraums, in welchem der Verdampfer angeordnet ist, das außerhalb des Verdampfers verbleibende Restvolumen mit einem Dämmmaterial gefüllt ist oder ein Dämmmaterial aufweist. Es könnte in anderen Ausführungsformen auch der gesamte Maschinenhohlraum luftgefüllt sein.

In bevorzugten Ausgestaltungsformen ist vorgesehen, dass der Speicherbehälter und der Maschinenhohlraum gemeinsam von einer Dämmschicht des Fluidspeichers ummantelt sind. Als Dämmschicht kommen sämtliche beim Stand der Technik bekannte Dämmschichtmaterialien, z.B. Mineralwolle, geschäumter Kunststoff und dergleichen in Frage. Die Dämmschicht weist vorzugsweise eine, insbesondere eigensteife, Hartschaumdämmung auf oder besteht daraus.

Vorteilhafterweise kann vorgesehen sein, dass der Speicherhohlraum und/oder der Speicherbehälter von einer kreiszylindermantelabschnittsförmigen Speicherbehälteraußenwand des Speicherbehälters begrenzt ist bzw. sind.

Bevorzugte Ausgestaltungsformen der Erfindung sehen vor, dass der Speicherhohlraum und der Maschinenhohlraum innerhalb eines Zylindermantels, vorzugsweise innerhalb eines Kreiszylindermantels, angeordnet sind, wobei der Zylindermantel bereichsweise von der kreiszylindermantelabschnittsförmigen Speicherbehälteraußenwand des Speicherbehälters gebildet ist.

In besonders bevorzugten Ausgestaltungsformen der Erfindung kann vorgesehen sein, dass der Maschinenhohlraum von einer kreiszylindermantelabschnittsförmigen Maschinenhohlraumaußenwand des Maschinenhohlraums begrenzt ist, welche einen Abschnitt des Zylindermantels bildet. Vorteilhaft ist es in diesem Zusammenhang, wenn der Zylindermantel den Speicherbehälter bzw. den Speicherhohlraum, vorzugsweise abgesehen von Anschlüssen des Speicherbehälters, und den Maschinenhohlraum gemeinsam begrenzt.

Vorzugsweise kann vorgesehen sein, dass der Zylindermantel von einer zylindermantelförmigen Innenfläche der Dämmschicht des Fluidspeichers gebildet ist. Zusätzlich kann die Dämmschicht des Fluidspeichers eine zylindermantelförmige Außenfläche aufweisen.

Bevorzugt ist vorgesehen, dass im Speicherhohlraum zumindest ein Überströmelement zur Entnahme und/oder Einbringung von Wärmeträgerflüssigkeit aus oder in den Speicherhohlraum angeordnet ist, wobei das Überströmelement eine Vielzahl von in den Speicherhohlraum mündenden Überströmöffnungen aufweist, und alle Überströmöffnungen in einer horizontalen Ebene oder in einem Zwischenraum zwischen zwei horizontalen, höchstens 80 mm voneinander beabstandeten, Ebenen angeordnet sind. Derartige Überströmelemente sind auch als Schichtweiche bekannt und ermöglichen ein kontrolliertes Ein- und Ausströmen ohne wesentliche Störung der Schichtung der Wärmeträgerflüssigkeit im Speicherhohlraum. Die durch Umwälzpumpen eines Heizungskreislaufs verursachte Strömungsdynamik wird durch die Überströmelemente stark vermindert. Dadurch wird die Ausbildung der thermischen Schichtung im Speicherhohlraum begünstigt, bei der wärmere Anteile der eingebrachten Wärmeträgerflüssigkeit aufsteigen und kältere Anteile der Wärmeträgerflüssigkeit absinken.

Günstigerweise kann vorgesehen sein, dass im Speicherhohlraum ein von einer Umgebungswärmeträgerflüssigkeit durchströmter Abtauwärmetauscher zur Abtauung eines außerhalb des Fluidspeichers angeordneten Luftkühlers des Wärmepumpenkreislaufs angeordnet ist. Bei Luft/Wasser Wärmepumpen werden sogenannte Luftkühler verwendet, um der Umgebungsluft (=Außenluft) Wärme zur Nutzung im Wärmepumpenkreislauf zu entziehen. Dabei kann es vorkommen, dass der in der Außenluft stehende Luftkühler vereist, wenn bestimmte klimatische Bedingungen auftreten. Mit dem im Speicherhohlraum angeordneten Abtauwärmetauscher ist es möglich, die Umgebungswärmeträgerflüssigkeit zeitweise durch den im Speicherhohlraum angeordneten Abtauwärmetauscher zu leiten und den Luftkühler mit von der Wärmeträgerflüssigkeit bereitgestellter und mittels der Umgebungswärmeträgerflüssigkeit zum Luftkühler transportierter Wärme abzutauen.

In bevorzugten Ausgestaltungsformen der Erfindung kann vorgesehen sein, dass der Wärmepumpenkreislauf einen Sauggaswärmetauscher aufweist, wobei der Sauggaswärmetauscher in den Fluidspeicher integriert ist. Der günstigerweise innerhalb des Maschinenhohlraums integrierte Sauggaswärmetauscher ermöglicht eine Effizienzsteigerung des Wärmepumpenkreislaufs. Mit einem Sauggaswärmetauscher kann die Verdampfungstemperatur des Kältemittels erhöht werden, wodurch die Jahresarbeitszahl der Wärmepumpe gesteigert werden kann. Zusätzlich schützt ein Sauggaswärmetauscher den Kompressor vor flüssigem Kältemittel. Sauggaswärmetauscher sind im Bereich der Wärmepumpentechnik an und für sich bekannt.

Bevorzugte Ausgestaltungsformen der Erfindung sehen vor, dass der Fluidspeicher einen Solarwärmetauscher zum Erwärmen der Wärmeträgerflüssigkeit im Speicherhohlraum aufweist. Der Fluidspeicher kann dann mit einer weiteren Wärmequelle gespeist werden.

Zusätzlich oder anstatt eines Solarwärmetauschers könnte die Wärmeträgerflüssigkeit auch mit anderen Wärmeerzeugern erwärmt werden. Es ist z.B. denkbar, Wärmetauscher für Holz-, Gas-, Öl-Kessel und andere Energiequellen vorzusehen.

Neben dem Fluidspeicher schlägt die Erfindung auch eine Anordnung mit einem Fluidspeicher zum Speichern einer Wärmeträgerflüssigkeit und einem Umgebungswärme von außerhalb des Fluidspeichers aufnehmenden Wärmepumpenkreislauf zur Erwärmung der Wärmeträgerflüssigkeit vor, wobei zumindest ein Kondensator des Wärmepumpenkreislaufs im Speicherhohlraum eines erfindungsgemäßen Fluidspeichers angeordnet ist.

Weitere Merkmale und Einzelheiten bevorzugter Ausgestaltungsformen der Erfindung werden anhand des in den Figuren dargestellten Ausführungsbeispiels eines erfindungsgemäßen Fluidspeichers und einer Anordnung mit einer Luftwärmepumpe und einem Fluidspeicher erläutert. Es zeigen:
Fig. 1 eine isometrische Ansicht eines erfindungsgemäßen Fluidspeichers ohne Dämmschicht;
Fig. 2 den Fluidspeicher gemäß Fig. 1 mit teilweise angebrachter Dämmschicht;
Fig. 3 bis 5 isometrische Ansichten des Fluidspeichers gemäß Fig. 1 mit einzeln hervorgehobenen Wärmetauschern;
Fig. 6 einen Grundriss des Fluidspeichers gemäß Fig. 1 und
Fig. 7 ein Beispiel für eine erfindungsgemäße Anordnung mit einem vereinfacht dargestellten Fluidspeicher gemäß Fig. 1 und einem Wärmepumpenkreislauf einer Luftwärmepumpe.

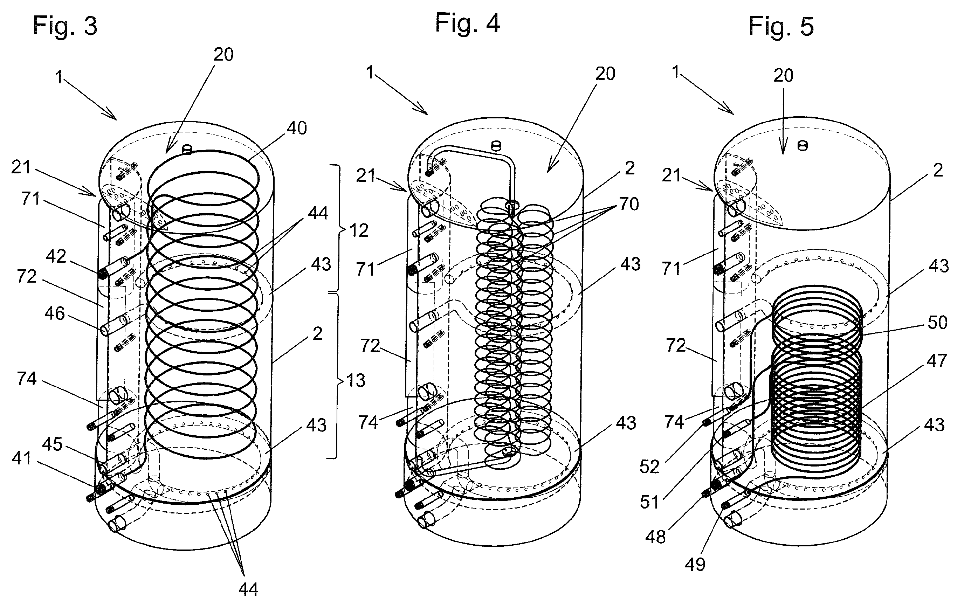

Zur besseren Übersicht sind nicht alle Bauteile in allen Figuren mit einem Bezugszeichen versehen. In den Fig. 3 bis 5 sind die im Fluidspeicher 1 bzw. im Speicherhohlraum 20 ineinander verschachtelten Wärmetauscher bzw. Kondensatoren 70 des Ausführungsbeispiels aus Gründen der Übersichtlichkeit nur einzeln und schematisch eingezeichnet.

Der Fluidspeicher 1 des Ausführungsbeispiels weist einen Speicherbehälter 2 mit einem Speicherhohlraum 20 zur Aufnahme der Wärmeträgerflüssigkeit auf. Die Wärmeträgerflüssigkeit speichert Wärmeenergie, welche in den Fluidspeicher 1 eingetragen wird und verschiedenen Wärmeverbrauchern bereitgestellt werden kann. Im Speicherhohlraum 20 ist im Betrieb eine thermische Schichtung ausgebildet, wobei sich kalte Wärmeträgerflüssigkeit im unteren Bereich der Vertikalerstreckung des Speicherhohlraums 20 sammelt und sich wärmere Wärmeträgerflüssigkeit im oberen Bereich des Speicherhohlraums 20 einlagert. Der Speicherhohlraum 20 ist in zwei Temperaturzonen unterteilt, welche den verschiedenen Temperaturbereichen der Wärmeträgerflüssigkeit entsprechen: eine im oberen Bereich des Speicherbehälters 2 angeordnete Hochtemperaturzone 12 und eine daran anschließende und in vertikaler Richtung darunter angeordnete Niedertemperaturzone 13. Die Hochtemperaturzone 12 erstreckt sich günstigerweise über die, vorzugsweise obersten, zumindest 25% und weniger als 50% der Vertikalerstreckung des Speicherhohlraums 20. Besonders bevorzugt erstreckt sich die Hochtemperaturzone 12 über etwa, vorzugsweise die obersten, 40% der Vertikalerstreckung des Speicherhohlraums 20. Auf die Bedeutung der Temperaturzonen wird im Folgenden noch eingegangen.

Der Fluidspeicher 1 weist im Ausführungsbeispiel einen Brauchwasserwärmetauscher 40 zur Bereitstellung von warmem Brauchwasser auf. Der Brauchwasserwärmetauscher 40 wird durch den Brauchwassereinlass 41 mit kaltem Brauchwasser gespeist. Das erwärmte Brauchwasser verlässt den Fluidspeicher 1 durch den Brauchwasserauslass 42 des Speicherbehälters 2, vgl. insbesondere Fig. 3. Der Brauchwasserwärmetauscher 40 erstreckt sich günstigerweise über, vorzugsweise die obersten, zumindest 75% der Vertikalerstreckung des Speicherhohlraums 20, wobei sich Anteile der Längserstreckung des Brauchwasserwärmetauschers 40 sowohl über die Niedertemperaturzone 13, als auch über die Hochtemperaturzone 12 erstrecken. In der Niedertemperaturzone 13 erfolgt die Vorwärmung des Brauchwassers, während in der Hochtemperaturzone 12 die benötigte Temperatur des Brauchwassers, vorzugsweise mehr als 60°, erreicht bzw. bereitgestellt ist.

Zur Verbindung mit einem Heizkreislauf (nicht dargestellt) einer Raumheizung weist der Speicherbehälter 2 einen Heizungsauslass 46 auf, welcher den Vorlauf des Heizkreises mit warmem Heizungswasser aus dem oberen Bereich der Niedertemperaturzone speist. Über den Heizungseinlass 45 strömt das (abgekühlte) Heizungswasser wieder in den Speicherhohlraum 20 des Speicherbehälters 2 zurück (und zwar in den unteren Bereich der Niedertemperaturzone 13). Die Wärmeträgerflüssigkeit ist in bevorzugten Ausgestaltungsformen, wie z.B. der hier gezeigten, gleichzeitig auch das Heizungswasser für den Heizkreislauf der Raumheizung eines Gebäudes. Zur Einbringung und Entnahme von Wärmeträgerflüssigkeit aus oder in den Speicherhohlraum 20 sind im Speicherhohlraum 20 zwei Überströmelemente 43 angeordnet, vgl. Fig. 3 bis 5. Die Überströmelemente 43 weisen eine Vielzahl von in den Speicherhohlraum 20 mündenden Überströmöffnungen 44. Ein jeweiliges Überströmelement 43 ist als, vorzugsweise zumindest abschnittsweise, kreisringförmige Rohrleitung ausgebildet, wobei die Überströmöffnungen 44 nach innen gerichtet sind. Die oft von einer Umwälzpumpe eines Heizkreises verursachten starken Strömungen im Speicherhohlraum 20 können durch die horizontale Ausrichtung und die Vielzahl von Überströmöffnungen 44 stark verringert werden. Vorzugsweise sind, wie dies auch im Ausführungsbeispiel vorgesehen ist, alle Überströmöffnungen 44 eines jeweiligen Überströmelements 43 in einer horizontalen Ebene oder in einem Zwischenraum zwischen zwei horizontalen, höchstens 80 mm voneinander beabstandeten, Ebenen angeordnet. Dabei kann aus den Überströmöffnungen 44 austretende warme Wärmeträgerflüssigkeit aufsteigen und kältere aus den Überströmöffnungen 44 austretende Wärmeträgerflüssigkeit absinken. Auch andere Überströmelemente als die hier gezeigten sind grundsätzlich denkbar und möglich.

Das obere der beiden Überströmelemente 43, also jenes zur Entnahme von Wärmeträgerflüssigkeit aus dem Speicherhohlraum 20, stellt die Grenze zwischen der Hochtemperaturzone 12 und der Niedertemperaturzone 13 dar, vgl. Fig. 3. Der Fluidspeicher 1 kann aufgrund der thermischen Schichtung sowohl Wärme für den Heizkreis mit einem zum Betrieb der Raumheizung benötigten Temperaturniveau, als auch Wärme zur Erwärmung von Brauchwasser im dazu nötigen Temperaturniveau zur Verfügung stellen.

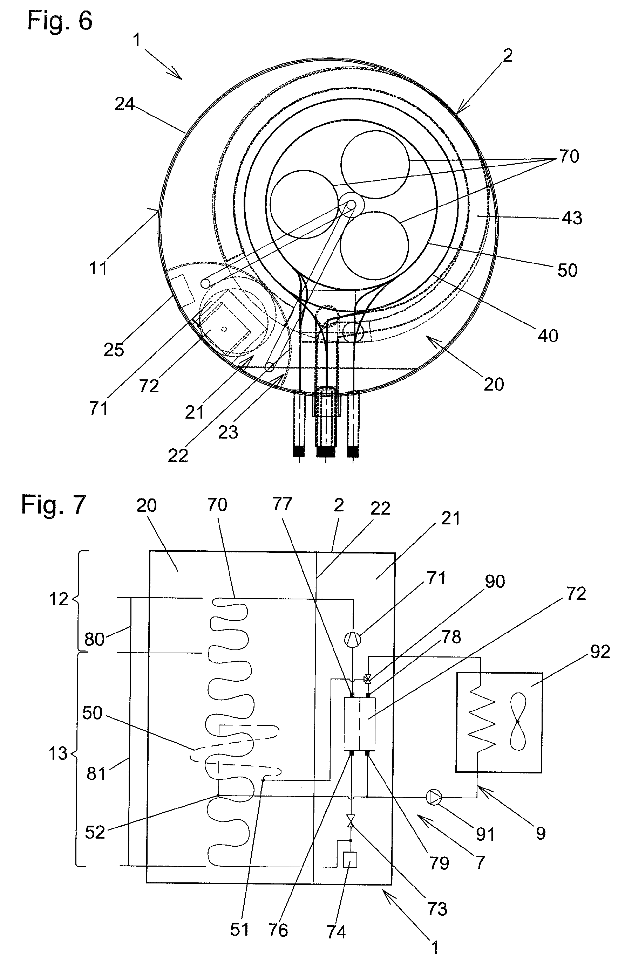

In den Fluidspeicher 1 des Ausführungsbeispiels sind Komponenten eines Wärmepumpenkreislaufs 7 integriert. Bevor auf die einzelnen Komponenten eingegangen wird, soll zuerst die grundsätzliche Funktionsweise des Wärmepumpenkreislaufs 7 der erläutert werden, vgl. Fig. 7.

Der Wärmepumpenkreislauf 7 weist einen von einem Kältemittel durchströmten Verdampfer 72 zur Aufnahme von Umgebungswärme auf, wobei im Verdampfer 72 das Kältemittel verdampft. Das Kältemittel verlässt im dampfförmigen Zustand den Verdampfer 72 und wird einem Kompressor 71 zugeführt. Der Kompressor 71 verdichtet unter Aufwendung technischer Arbeit das Kältemittel, welches nach der Verdichtung eine hohe Temperatur aufweist (=Heißdampf) und wird nunmehr dem im Speicherhohlraum 20 angeordneten Kondensator 70 zugeführt. Bei der Abgabe von Wärme zur Erwärmung der Wärmeträgerflüssigkeit kondensiert das Kältemittel in den Kondensatoren 70. Nunmehr wird das Kältemittel einem Expansionsventil 73 zugeführt, in welchem das Kältemittel expandiert. Schließlich wird das Kältemittel wiederum dem Verdampfer 72 zugeführt, womit der Kältemittelkreis des Wärmepumpenkreislaufs 7 geschlossen ist.

Zum Erwärmen der Wärmeträgerflüssigkeit sind im Speicherhohlraum 20 des Fluidspeichers 1 des Ausführungsbeispiels drei parallel geschaltete Kondensatoren 70 des vom Kältemittel durchströmten Wärmepumpenkreislaufs 7 angeordnet, vgl. Fig. 4. Je nach Leistungsanforderung könnten auch weniger als drei oder mehr als drei Kondensatoren 70 im Speicherhohlraum 20 angeordnet sein. Die Kondensatoren 70 werden von oben nach unten vom Kältemittel durchströmt. Im Ausführungsbeispiel sind die Kondensatoren 70 als Röhrenkondensatoren ausgeführt, wie dies auch bevorzugt ist. Ein jeweiliger Kondensator 70 ist als Glattrohrkondensator ausgeführt. In anderen Ausgestaltungsformen könnte der als Röhrenkondensator ausgeführte Kondensator 70 auch ein Wellrohrkondensator sein. Es ist auch denkbar, dass der Kondensator 70 in anderen Ausgestaltungsformen ein Plattenkondensator oder dergleichen ist.

Ein jeweiliger Kondensator 70 erstreckt sich vertikal über zumindest 60%, vorzugsweise über zumindest 70% (wie im Ausführungsbeispiel gezeigt), der Vertikalerstreckung des Speicherhohlraums 20. Günstigerweise kann (wie im Ausführungsbeispiel) vorgesehen sein, dass eine jeweiliger Kondensator 70 in der Betriebsstellung des Fluidspeichers 1 gesehen, in vertikaler Richtung von der den Speicherhohlraum 20 in vertikaler Richtung begrenzenden Wand (=Deckel des Speicherbehälters 2) beabstandet ist. Im Ausführungsbeispiel beträgt der in vertikaler Richtung zwischen der den Speicherhohlraum 20 in vertikaler Richtung begrenzenden Wand und den Kondensatoren 70 gemessene Abstand 25% des Betrages der Vertikalerstreckung des Speicherhohlraums 20. Der Abstand könnte in anderen Ausgestaltungsformen auch mehr oder weniger als 25% betragen, wobei ein Abstand der höchstens 30% des Betrags der Vertikalerstreckung des Speicherhohlraums 20 entspricht, besonders bevorzugt ist.

Der Kondensator 70 des Fluidspeichers 1 weist eine Enthitzungszone 80 auf, welche ca. 20% der Vertikalerstreckung des Kondensators 70 entspricht, vgl. Fig. 7. In der Enthitzungszone 80 liegt das Kältemittel als Heißdampf vor. Der Heißdampf dient insbesondere der Bereitstellung von Wärme mit hoher Temperatur in der Wärmeträgerflüssigkeit und damit der Erwärmung von Brauchwasser in der Hochtemperaturzone 12 des Speicherbehälters 2. Unterhalb der Enthitzungszone 80 befindet sich die Kondensationszone 81 des Kondensators 70. In dieser wird das Kältemittel während der Wärmeabgabe im Kondensator 70 kondensiert (=verflüssigt). Die Kondensationszone 81 befindet sich in der Niedertemperaturzone 13 des Speicherbehälters 2. Im unteren Bereich der Kondensationszone 81 liegt das Kältemittel in unterkühlter Form, also mit einer Temperatur unterhalb der Verflüssigungstemperatur, vor.

Als Kältemittel kommen verschiedene im Stand der Technik hinlänglich bekannte Kältemittel in Frage. Besonders bevorzugt ist im Ausführungsbeispiel das Kältemittel R407C.

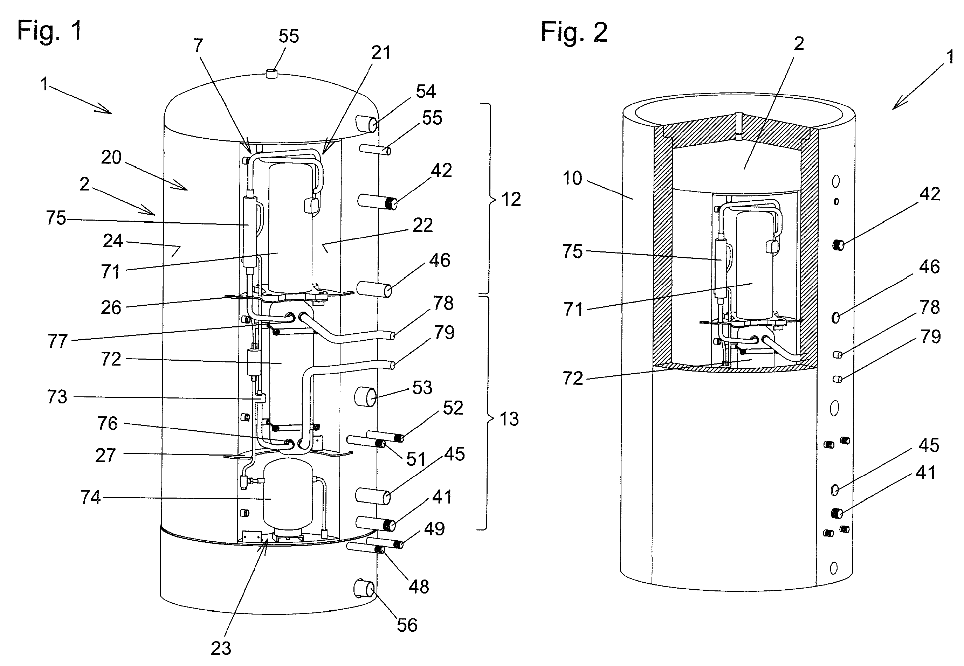

Der Verdampfer 72 weist im Ausführungsbeispiel einen Plattenwärmetauscher auf. Auch andere Bauformen des Verdampfers 72 sind denkbar und möglich. Zur Einspeisung der Umgebungswärme weist der Verdampfer 72 einen Umgebungswärmeeinlass 78 auf, durch welche eine Umgebungswärmeträgerflüssigkeit eines Umgebungswärmekreises 9 zugeführt wird. Durch den Umgebungswärmeauslass 79 verlässt die Umgebungswärmeträgerflüssigkeit den Verdampfer 72 wieder zur Aufnahme von Wärme aus der Umgebung (=im Beispiel aus der Außenluft), vgl. Fig. 1 und 7. Vorteilhafterweise ist der Plattenwärmetauscher des Verdampfers 72, wie im Ausführungsbeispiel vorgesehen, ein Gegenstromwärmetauscher, d.h., dass die aneinander vorbeiströmenden Fluide, also das Kältemittel bzw. die Umgebungswärmeträgerflüssigkeit, einander entgegenströmen.

Auf der Seite des Kältemittelkreises der Wärmepumpe 7, diese Seite könnte auch als Sekundärseite des Verdampfers 72 bezeichnet werden, weist der Verdampfer 72 einen Kältemitteleinlass 76, welcher mit dem vom Expansionsventil 73 expandierten Kältemittel versorgt wird und einen Kältemittelauslass 77 auf, welcher dem Kompressor 71 das im Verdampfer 72 erwärmte Kältemittel bereitstellt.

Optional ist es denkbar und möglich, im Wärmepumpenkreislauf 7 einen Sauggaswärmetauscher 75 vorzusehen, wie dies auch im Ausführungsbeispiel vorgesehen ist. Der Sauggaswärmetauscher 75 dient einerseits dazu, die Verdampfungstemperatur des Kältemittels um ca. 2-3 ° C zu erhöhen und andererseits den Kompressor 71 vor dem Eintritt von noch flüssigem Kältemittel zu schützen. Sauggaswärmetauscher sind im Stand der Technik von Wärmepumpenkreisläufen grundsätzlich bekannt.

Der Wärmepumpenkreislauf 7 des Ausführungsbeispiels weist zusätzlich einen Sammler 74 zur Speicherung von Kältemittel auf. Der Sammler 74 befindet sich in Richtung des Kältemittelkreises gesehen zwischen dem Kondensator 70 und dem Expansionsventil 73. Ein Sammler 74 ist nicht zwingend notwendig.

Im Ausführungsbeispiel ist der Kompressor 71 (im Ausführungsbeispiel ist ein Scroll-Verdichter vorgesehen) in den Fluidspeicher 1 integriert und in der oberen Hälfte der Vertikalerstreckung des Speicherbehälters 2 außerhalb am Speicherbehälter 2 angeordnet. Vorzugsweise befindet sich der Kompressor 71 in unmittelbarer Nähe zu einem Abschnitt der Wand des Speicherbehälters 2, welche die Hochtemperaturzone 12 des Speicherbehälters 2 direkt begrenzt, wie dies auch im Ausführungsbeispiel gezeigt ist. Dadurch kann Wärme mit hoher Temperatur für die Beheizung des Kompressors 71 verwendet und auf eine Ölsumpfheizung zur Beheizung des Öls des Kompressors 71 verzichtet werden. Dies steigert die Gesamtenergiebilanz wesentlich.

Auch der Verdampfer 72, das Expansionsventil 73, der Sammler 74 und der Sauggaswärmetauscher 75 sind im Ausführungsbeispiel in den Fluidspeicher 1 integriert. Zur Aufnahme dieser Komponenten und des Kompressors 71 des Wärmepumpenkreislaufs 7 weist der Fluidspeicher 1 einen Maschinenhohlraum 21 auf. Zwischen dem Speicherhohlraum 20 und dem Maschinenhohlraum 21 ist eine Trennwand 22 angeordnet. Die Trennwand 22 wird von einer den Speicherhohlraum 20 und den Maschinenhohlraum 21 begrenzenden Wand des Speicherbehälters 2 gebildet, vgl. Fig. 1 und Fig. 6. Die Trennwand 22 stellt eine Wärmeübertragungsfläche zur Übertragung von in der Wärmeträgerflüssigkeit gespeicherter Wärme dar, welche zur Beheizung des Kompressors 71 verwendet wird.

Die Trennwand 22 bildet im Ausführungsbeispiel eine in den Speicherhohlraum 20 hineinragende Einbuchtung 23 des Speicherbehälters 2 aus. Im Ausführungsbeispiel weist die Einbuchtung 23 eine, in einem Querschnitt gesehen, konkave Form auf. Auch andere Formen der Einbuchtung 23 sind grundsätzlich möglich, wie dies oben bereits erläutert wurde. Die konkave Form der Einbuchtung 23 ist in einem Querschnitt orthogonal zur Vertikalerstreckung des Speicherbehälters 2 gesehen, ersichtlich, vgl. insbesondere Fig. 6. Die Wärmeübertragungsfläche der Trennwand 22 umgreift den Kompressor 71 zum Teil, wodurch eine hohe Wärmemenge zur Beheizung des Kompressors 71 bereitgestellt werden kann.

Irn Maschinenhohlraum 21 sind eine Kompressorkonsole 26 und eine Verdampferkonsole 27 angeordnet, welche mit dem Speicherbehälter 2 verbunden, vorzugsweise verschweißt sind. Auf der Kompressorkonsole 26 ist der Kompressor 71 montiert. Zusätzlich dient die Kompressorkonsole 26 der Unterteilung des Maschinenhohlraums 21 in vertikaler Richtung. Der Verdampfer 72 ist mit einer Verdampferkonsole 27 verbunden, welche ebenfalls den Maschinenhohlraum 21 in vertikaler Richtung unterteilt, wie dies im Ausführungsbeispiel vorgesehen ist. Der Maschinenhohlraum 21 kann zur Gänze luftgefüllt sein. In anderen Ausführungsformen der Erfindung ist es denkbar und möglich, dass nur der Bereich des Maschinenhohlraums 21, in welchem der Kompressor 71 angeordnet ist, luftgefüllt ist, während die restlichen Abschnitte des Maschinenhohlraums 21, z.B. um den Verdampfer 72 herum, mit einem geeigneten Dämmmaterial gedämmt sind.

Im Ausführungsbeispiel ist der Speicherhohlraum 20 von einer kreiszylindermantelabschnittsförmigen Speicherbehälteraußenwand 24 des Speicherbehälters 2 begrenzt. Die Innenseite der Speicherbehälteraußenwand 24 begrenzt im Ausführungsbeispiel den Speicherhohlraum 20. In Fig. 6 ist ein Zylindermantel 11 eingezeichnet, welcher bereichsweise von der kreiszylindermantelabschnittsförmigen Speicherbehälteraußenwand 24 des Speicherbehälters 2 gebildet ist. Der Zylindermantel 11 ist im Ausführungsbeispiel ein Kreiszylindermantel. Im Ausführungsbeispiel ist vorgesehen, dass der Speicherhohlraum 20 und der Maschinenhohlraum 21 innerhalb des Zylindermantels 11 angeordnet sind. Dadurch wird eine kompakte Außenform des Fluidspeichers 1 bereitgestellt. In anderen Ausführungsformen der Erfindung ist es auch denkbar und möglich, dass der Maschinenhohlraum 21 vom Zylindermantel 11 hervorspringt.

Im Ausführungsbeispiel ist der Maschinenhohlraum 21 von einer kreiszylindermantelabschnittsförmigen Maschinenhohlraumaußenwand 25 des Maschinenhohlraums 21 begrenzt, welche einen Abschnitt des Zylindermantels 11 bildet. Die Maschinenhohlraumaußenwand 25 stellt gewissermaßen eine Abdeckung des Maschinenhohlraums 21 dar. Auf eine Abdeckung des Maschinenhohlraums 21 mit einer Maschinenhohlraumaußenwand 25 könnte auch verzichtet werden.

Der Speicherbehälter 2 und der Maschinenhohlraum 21 sind gemeinsam von einer Dämmschicht 10 des Fluidspeichers 1 ummantelt. Die Dämmschicht 10 vermindert die Wärmeverluste des Speicherbehälters 2 und des Maschinenhohlraums 21 gegenüber der unmittelbaren Umgebung des Fluidspeichers 1. Im Ausführungsbeispiel weist die Dämmschicht 10 mehrere Segmente auf, welche einzeln vom Fluidspeicher 1 entfernt werden können, um z.B. den Maschinenhohlraum 21 freizulegen, vgl. Fig. 2. Die Komponenten des Wärmepumpenkreislaufs 7 können so bei Bedarf schnell gewartet oder ausgetauscht werden. Der Maschinenhohlraum 21 könnte in anderen Ausführungsformen der Erfindung, unter Weglassung der Maschinenhohlraumaußenwand 25, direkt von der Dämmschicht 10 begrenzt sein.

Die Dämmschicht 10 ist im Ausführungsbeispiel als eigensteife Hartschaumdämmung aus Polyurethan ausgeführt. Im Ausführungsbeispiel ist vorgesehen, dass die Dämmschicht 10 eine zylindermantelförmige Außenfläche aufweist. Auch andere Materialien zur Bereitstellung der Dämmschicht 10 sind prinzipiell möglich, wie dies bereits oben ausgeführt wurde.

Im Ausführungsbeispiel ist vorgesehen, dass der Fluidspeicher 1 einen Solarwärmetauscher 47 zur Erwärmung der Wärmeträgerflüssigkeit mit Sonnenenergie aufweist, vgl. Fig. 5. Der Solarwärmetauscher 47 wird über einen Solarwärmeeinlass 48 mit Solarflüssigkeit gespeist. Die Solarflüssigkeit verlässt den Solarwärmetauscher 47 über den Solarwärmeauslass 49. Anstatt oder zusätzlich zum Solarwärmetauscher 47 könnten in anderen Ausführungsformen des Fluidspeichers 1 weitere Wärmetauscher zur Einbringung von Wärmeenergie eingesetzt werden. So kann z.B. ein bivalenter Betrieb des Fluidspeichers 1 erreicht werden. Die Wärmeenergie könnte beispielsweise von Ölbrennern, Gas-, Holz- oder Pelletskesseln und dergleichen bereitgestellt sein.

Die Umgebungswärme wird anhand des Luftkühlers 92 aus der Umgebung aus der Außenluft entzogen und über den Umgebungswärmekreis 9 dem Verdampfer 72 zugeführt, wie dies bereits erläutert wurde. Als Umgebungswärmeträgerflüssigkeit kann beispielsweise Sole verwendet werden. Die Pumpe 91 befördert die Umgebungswärmeträgerflüssigkeit im Umgebungswärmekreis 9. Im Umgebungswärmekreis 9 ist ein Umschaltventil 90 vorgesehen, welches es ermöglicht, dass die Umgebungswärmeträgerflüssigkeit anstatt durch den Verdampfer 72 durch einen im Speicherhohlraum angeordneten Abtauwärmetauscher 50 hindurchfließt (=Bypass des Verdampfers 72), vgl. auch Fig. 5. Der Abtauwärmetauscher 50 wird über den Abtaueinlass 51 von der Umgebungswärmeträgerflüssigkeit durchströmt. Über den Abtauauslass 52 verlässt die Umgebungswärmeträgerflüssigkeit den Fluidspeicher 1 wieder. Anhand des integrierten Abtauwärmetauschers 50 ist es möglich, die gespeicherte Wärme der Wärmeträgerflüssigkeit im Fluidspeicher 1 zur Abtauung des Luftkühlers 92 zu verwenden. Insbesondere bei Luftwärmepumpen kann der Luftkühler 92 bei bestimmten klimatischen Bedingungen vereisen, was zu einer Verminderung des Wirkungsgrades führen kann. Durch den Einbau des optionalen Abtauwärmetauschers 50 kann ein einfaches und zuverlässiges System zur Abtauung des Luftkühlers 92 einer Luftwärmepumpe bereitgestellt werden.

Bei anderen Wärmepumpentechnologien, wie beispielsweise Geothermie oder (Grund-) Wasserpumpen kann auf die Integration eines Abtauwärmetauschers 50 im Speicherhohlraum 20 gänzlich verzichtet werden. Der Luftkühler 92 wird bei Nutzung von in anderer Form vorliegender Umgebungswärme durch entsprechende Erdwärmesonden, Erdwärmekollektoren, einen Grundwasser-Wärmetauscher etc. ersetzt.

Der Vollständigkeit halber wird noch auf Fig. 6 verwiesen, in der die ineinander verschachtelten Abtauwärmetauscher 50, der Brauchwasserwärmetauscher 40 und die Überströmelemente 43 und die Kondensatoren 70, gut ersichtlich sind.

Der Abtauwärmetauscher 50, der Brauchwasserwärmetauscher 40 und der Solarwärmetauscher 47 sind im Ausführungsbeispiel jeweils als Röhrenwärmetauscher ausgeführt. Ein jeweiliger Röhrenwärmetauscher ist im Ausführungsbeispiel als Glattrohrwärmetauscher ausgeführt. Es ist denkbar und möglich, dass der Röhrenwärmetauscher in anderen Ausgestaltungsformen ein Wellrohrwärmetauscher ist. Einzelne oder alle der genannten Wärmetauscher könnten in anderen Ausgestaltungsformen auch anstatt des jeweiligen Röhrenwärmetauschers z.B. als Plattenwärmetauscher oder dergleichen ausgeführt sein.

Im Ausführungsbeispiel ist vorgesehen, dass der Speicherhohlraum 20 des Fluidspeicher 1 ein Volumen von 750 Liter Wärmeträgerflüssigkeit aufnimmt. Auch andere Speichergrößen sind möglich, wobei auf die oben angeführten Ausführungen zum bevorzugten Speichervolumen verwiesen wird.

Der Speicherbehälter 2 weist im Ausführungsbeispiel noch weitere Anschlüsse auf, vgl. Fig. 1. Über die Erweiterungsanschlüsse 53, 54 kann der Fluidspeicher mit weiteren Speicherbehältern zur Erhöhung der Speicherkapazität kommunizierend verbunden sein. In anderen Ausführungsformen könnte der Erweiterungsanschluss 54 auch einen Elektroheizstab aufweisen, um zusätzliche Wärme einzubringen. Weiters weist der Speicherbehälter Entlüftungen 55 auf, um den Speicherhohlraum 20 zu entlüften. Über den Entleerungsanschluss 56 kann die Wärmeträgerflüssigkeit ausgelassen werden.

Es ist in anderen Ausführungsformen der Erfindung denkbar und möglich, dass der Kompressor 71 des Wärmepumpenkreislaufs 7 in anderen Ausführungsformen der Erfindung direkt im Speicherhohlraum 20 des Speicherbehälters 2 angeordnet ist.

In weiteren möglichen Ausführungsformen der Erfindung könnte der Kompressor 71 auch über dem Speicherbehälter 2 angeordnet sein, wobei ein Abschnitt einer oberen Wand (=Deckel) des Speicherbehälters 2 die Trennwand mit der Wärmeübertragungsfläche bilden könnte.

**Legende zu den Hinweisziffern:**

| | | | |
|---|---|---|---|
| 1 | Fluidspeicher | 50 | Abtauwärmetauscher |
| 2 | Speicherbehälter | 51 | Abtaueinlass |
| 7 | Wärmepumpenkreislauf | 52 | Abtauauslass |
| 9 | Umgebungswärmekreis | 53 | Erweiterungsanschluss |
| | | 54 | Erweiterungsanschluss |
| 10 | Dämmschicht | 55 | Handentlüftungsanschluss |
| 11 | Zylindermantel | 56 | Entleerungsanschluss |
| 12 | Hochtemperaturzone | | |
| 13 | Niedertemperaturzone | 70 | Kondensator |
| | | 71 | Kompressor |
| 20 | Speicherhohlraum | 72 | Verdampfer |
| 21 | Maschinenhohlraum | 73 | Expansionsventil |
| 22 | Trennwand | 74 | Sammler |
| 23 | Einbuchtung | 75 | Sauggaswärmetauscher |
| 24 | Speicherbehälteraußenwand | 76 | Kältemitteleinlass |
| 25 | Maschinenhohlraumaußenwand | 77 | Kältemittelauslass |
| 26 | Kompressorkonsole | 78 | Umgebungswärmeeinlass |
| 27 | Verdampferkonsole | 79 | Umgebungswärmeauslass |
| | | 80 | Enthitzungszone |
| 40 | Brauchwasserwärmetauscher | 81 | Kondensationszone |
| 41 | Brauchwassereinlass | | |
| 42 | Brauchwasserauslass | 90 | Umschaltventil |
| 43 | Überströmelement | 91 | Pumpe |
| 44 | Überströmöffnung | 92 | Luftkühler |
| 45 | Heizungseinlass | | |
| 46 | Heizungsauslass | | |
| 47 | Solarwärmetauscher | | |
| 48 | Solarwärmeeinlass | | |
| 49 | Solarwärmeauslass | | |

## Patentansprüche

1. Fluidspeicher (1) zum Speichern einer Wärmeträgerflüssigkeit in einem Speicherhohlraum (20) eines Speicherbehälters (2) des Fluidspeichers (1), wobei innerhalb des Speicherhohlraums (20) zumindest ein Kondensator (70) eines von einem Kältemittel durchströmten Wärmepumpenkreislaufs (7) zum Erwärmen der Wärmeträgerflüssigkeit angeordnet ist, und das durch den Kondensator (70) strömende Kältemittel mittels des Wärmepumpenkreislaufs (7) mit außerhalb des Fluidspeichers (1) aufgenommener Umgebungswärme des Wärmepumpenkreislaufs (7) erwärmt oder erwärmbar ist, **dadurch gekennzeichnet, dass** zumindest ein Kompressor (71) des Wärmepumpenkreislaufs (7) in den Fluidspeicher (1) zur Nutzung der Wärme der Wärmeträgerflüssigkeit im Fluidspeicher (1) integriert ist.

2. Fluidspeicher (1) nach Anspruch 1, **dadurch gekennzeichnet, dass** ein Verdampfer (72) des Wärmepumpenkreislaufs (7) in den Fluidspeicher (1) integriert ist.

3. Fluidspeicher (1) nach Anspruch 1 oder 2, **dadurch gekennzeichnet, dass** der in den Fluidspeicher (1) integrierte Kompressor (71) und vorzugsweise auch der in den Fluidspeicher (1) integrierte Verdampfer (72) zumindest teilweise, vorzugsweise vollständig, innerhalb eines Maschinenhohlraums (21) des Fluidspeichers (1) angeordnet ist oder sind, wobei zumindest eine Trennwand (22) zwischen dem Speicherhohlraum (20) und dem Maschinenhohlraum (21) angeordnet ist.

4. Fluidspeicher (1) nach Anspruch 3, **dadurch gekennzeichnet, dass** die Trennwand (22) eine in den Speicherhohlraum (20) hineinragende Einbuchtung (23) des Speicherbehälters (2) ausbildet, wobei vorzugsweise vorgesehen ist, dass die Einbuchtung (23) eine, in einem Querschnitt gesehen, konkave Form aufweist.

5. Fluidspeicher (1) nach einem der Ansprüche 3 oder 4, **dadurch gekennzeichnet, dass** der Speicherbehälter (2) und der Maschinenhohlraum (21) gemeinsam von einer Dämmschicht (10) des Fluidspeichers (1) ummantelt sind.

6. Fluidspeicher (1) nach einem der Ansprüche 1 bis 5, **dadurch gekennzeichnet, dass** der Speicherhohlraum (20) und/oder der Speicherbehälter (2) von einer kreiszylindermantelabschnittsförmigen Speicherbehälteraußenwand (24) des Speicherbehälters (2) begrenzt ist bzw. sind.

7. Fluidspeicher (1) nach Anspruch 6, **dadurch gekennzeichnet, dass** der Speicherhohlraum (20) und der Maschinenhohlraum (21) innerhalb eines Zylindermantels (11), vorzugsweise innerhalb eines Kreiszylindermantels, angeordnet sind, wobei der Zylindermantel (11) bereichsweise von der kreiszylindermantelabschnittsförmigen Speicherbehälteraußenwand (24) des Speicherbehälters (2) gebildet ist.

8. Fluidspeicher (1) nach Anspruch 7, **dadurch gekennzeichnet, dass** der Maschinenhohlraum (21) von einer kreiszylindermantelabschnittsförmigen Maschinenhohlraumaußenwand (25) des Maschinenhohlraums (21) begrenzt ist, welche einen Abschnitt des Zylindermantels (11) bildet.

9. Fluidspeicher (1) nach einem der Ansprüche 1 bis 8, **dadurch gekennzeichnet, dass** im Speicherhohlraum (20) zumindest ein Überströmelement (43) zur Entnahme und/oder Einbringung von Wärmeträgerflüssigkeit aus oder in den Speicherhohlraum (20) angeordnet ist, wobei das Überströmelement (43) eine Vielzahl von in den Speicherhohlraum (20) mündenden Überströmöffnungen (44) aufweist, und alle Überströmöffnungen (44) in einer horizontalen Ebene oder in einem Zwischenraum zwischen zwei horizontalen, höchstens 80 mm voneinander beabstandeten, Ebenen angeordnet sind.

10. Anordnung mit einem Fluidspeicher (1) zum Speichern einer Wärmeträgerflüssigkeit und einem Umgebungswärme von außerhalb des Fluidspeichers (1) aufnehmenden Wärmepumpenkreislauf (7) zur Erwärmung der Wärmeträgerflüssigkeit, wobei zumindest ein Kondensator (70) des Wärmepumpenkreislaufs (7) im Speicherhohlraum (20) eines Fluidspeichers (1) nach einem der Ansprüche 1 bis 9 angeordnet ist.
